# EUROPÄISCHE PATENTSCHRIFT

(11) **EP 1 694 534 B1**
(45) Veröffentlichungstag und Bekanntmachung des Hinweises auf die Patenterteilung: **19.03.2008**
(21) Anmeldenummer: 04762456.4
(22) Anmeldetag: 22.07.2004
(51) Int. Cl.: B60R 21/0132, B60R 21/0136

(54) **VORRICHTUNG ZUR ANSTEUERUNG VON PERSONENSCHUTZMITTELN**
DEVICE FOR ACTIVATING PROTECTING MEANS FOR INDIVIDUALS
DISPOSITIF DE COMMANDE DE MOYENS DE PROTECTION DE PERSONNES

(30) Priorität: 09.12.2003 DE 10357352
(43) Veröffentlichungstag der Anmeldung: 30.08.2006
(73) Patentinhaber: ROBERT BOSCH GMBH, 70442 Stuttgart (DE)
(72) Erfinder: ROELLEKE, Michael, 71229 Leonberg-Hoefingen (DE)
(86) Internationale Anmeldenummer: PCT/DE2004/001606
(87) Internationale Veröffentlichungsnummer: WO 2005/056345

(56) Entgegenhaltungen:
- DE-A- 4 106 079
- DE-A- 10 033 907
- DE-A- 10 147 732
- DE-A- 19 745 309
- DE-A- 19 900 327
- DE-A- 19 963 348

## Beschreibung

### Stand der Technik

Die Erfindung geht aus von einer Vorrichtung zur Ansteuerung von Personenschutzmitteln nach der Gattung des unabhängigen Patentanspruchs.

Aus DE 100 33 907 A1 ist es bekannt, eine Vorrichtung zur Ansteuerung von Personenschutzmitteln zu verwenden. Hier wird beispielsweise die Crashschwere, die von einem Frontsensor ermittelt wird, zur Ansteuerung der Personenschutzmittel verwendet.

Aus DE 197 45 309 A1 ist es bekannt, eine auftretende Materialverformung bei einem Zusammenstoß an einem Kunststoffteil, welches außen am Fahrzeug angebracht ist, akustisch, elektrisch oder optisch zu erfassen. Damit kann der genaue Unfallort detektiert werden. Anhand von Schallwellen, die in einem rohrförmigen Wellenleitersystem aufgefangen werden und an einem zentralen Piezoelement zugeführt werden, kann nur die Unfallschwere bestimmt werden. Aus DE 199 63 348 A1 , die die Merkmale des Oberbegriffs des Anspruchs 1 zeigt, wird mittels verteilten Beschleunigungssensoren anhand einer Laufzeitdifferenz zwischen den Messsignalen der Beschleunigungssensoren der Zeitpunkt und der Ort der Krafteinwirkung bestimmt.

### Vorteile der Erfindung

Die erfindungsgemäße Vorrichtung zur Ansteuerung von Personenschutzmitteln mit den Merkmalen des unabhängigen Patentanspruchs hat demgegenüber den Vorteil, dass nunmehr die Laufzeit zwischen einem ersten Signal, das einen Aufprall kennzeichnet, von einer Aufprallsensorik, die im Bereich der Fahrzeugfront angeordnet ist und einem zweiten Signal von einer zentral im Fahrzeug angeordneten Beschleunigungssensorik, die ebenfalls den Aufprall anzeigt. Diese Laufzeit gibt nicht nur über den Crashverlauf, sondern auch über den Crashpartner Auskunft. Damit liegt ein Parameter vor, der zur verbesserten Ansteuerung der Personenschutzmittel wie Airbag, Gurtstraffer, Überrollbügel oder Fußgängerschutzmitteln dient.

Durch die in den abhängigen Ansprüchen aufgeführten Maßnahmen und Weiterbildungen sind vorteilhafte Verbesserungen der im unabhängigen Patentanspruch angegebenen Vorrichtung zur Ansteuerung von Personenschutzmitteln möglich.

Besonders vorteilhaft ist, dass die Vorrichtung in Abhängigkeit von dem Laufzeitunterschied eine Crashschwere bestimmt und die Personenschutzmittel in Abhängigkeit von der Crashschwere ansteuert. Der zentral im Fahrzeug eingebaute Beschleunigungssensor, typischerweise auf dem Tunnel, sieht den direkten Aufprall auf das Objekt nicht. Es vergehen einige Millisekunden, bis ein Beschleunigungssignal erkannt wird. Diese Zeitverzögerung, also der Laufzeitunterschied, ist abhängig von der Crashkonfiguration, also der Aufprallgeschwindigkeit und dem Verhältnis der Steifigkeiten der Unfallpartner sowie deren Massen. Durch die Bestimmung dieser Laufzeitverzögerung zwischen Aufprall und dem Erreichen einer Startschwelle, also der Rauschschwelle und der Analyse des nach der Startschwelle folgenden Aufprallimpulses, können gute Aussagen über die Crashschwere gemacht werden.

Das erste und das zweite Signal werden dadurch erzeugt, dass auf Grund eines Aufpralls Rauschschwellen jeweils übertroffen werden. Dabei kann es sich insbesondere bei der Aufprallsensorik um Kontaktschalter handeln. Diese werden durch die Wirkung des Aufpralls geschlossen.

Weiterhin ist es von Vorteil, dass die Vorrichtung in Abhängigkeit von dem Signal der Aufprallsensorik einen Auslösealgorithmus startet. Damit wird der Auslösealgorithmus auf den tatsächlichen Aufprallzeitpunkt synchronisiert. Durch die Synchronisation auf den realen Aufprall kann eine vereinfachte Trennung, gerade im unteren Geschwindigkeitsbereich, bei weichen Barrieren erreicht werden.

Außerdem ist es vorteilhaft, dass die Vorrichtung in Abhängigkeit von dem Lautzeitunterschied eine Größe eines Aufprallobjekts bestimmt und in Abhängigkeit von der Größe den Auslösealgoritlunus beeinflusst. Dies ist insbesondere bei sogenannten Pfahlcrashes möglich. Damit kann vor allem die Auslöseempfindlichkeit, also eine Veränderung der Rauschschwelle, erreicht werden. Durch das Eindringen des Pfahls in die weichen Fahrzeugstrukturen, treten nach dem Aufprallimpuls kaum Verzögerungen auf. Dies ändert sich erst ab einer späteren Zeitmarke. Dort trifft der Pfahl auf massive Strukturen, zum Beispiel den Motorblock, und sorgt damit für die Verzögerung des Fahrzeugs. Eine Identifikation des Objekts führt zu einer Anpassung der Auslöseschwelle.

Darüber hinaus ist es von Vorteil, dass die erfindungsgemäße Vorrichtung anhand des Laufzeitunterschieds eine Schätzung über den Aufprallort abgibt, wobei der Aufprallort bei der Ansteuerung der Personenschutzmittel berücksichtigt wird.

Vorteilhafter Weise weist die Aufprallsensorik eine Kontaktsensorik wie Kraftschalter und/oder eine Beschleunigungssensorik auf. Diese Sensoren können direkt am Stoßfänger angeordnet sein, oder aber im erweiterten Bereich der Fahrzeugfront, d.h. beispielsweise auch an der Fronthaube.

Schließlich ist es auch von Vorteil, dass die Aufprallsensorik an der Fahrzeugfront verteilt ist, um den Aufprallort besser zu detektieren.

### Zeichnung

Ausführungsbeispiele der Erfindung sind in der Zeichnung dargestellt und werden in der nachfolgenden Beschreibung näher erläutert.

Es zeigen
- Figur 1: ein Blockschaltbild der erfindungsgemäßen Vorrichtung,
- Figur 2: ein weiteres Blockschaltbild der erfindungsgemäßen Vorrichtung,
- Figur 3: ein weiteres Blockschaltbild der erfindungsgemäßen Vorrichtung,
- Figur 4: ein Flussdiagramm,
- Figur 5: einen Signalvergleich mit dem Einfluss der Rauschschwelle,
- Figur 6: einen Signalvergleich ohne den Einfluss der Rauschschwelle,
- Figur 7: einen Effekt der Startschwelle und
- Figur 8: einen Pfahlcrash.

### Beschreibung

In der Europäischen Union soll ab 2005 per Gesetzgebung ein Fußgängerschutz bei Fahrzeugen eingeführt werden. Neben anfänglichen passiven Lösungen, wie eine entsprechende Gestaltung der Fahrzeugfront, werden in späteren Stufen auch aktive Schutzmaßnahmen eingeführt. Zu solchen Schutzmaßnahmen gehören Airbags im Bereich der Fronthaube und Aufprallsensoren, in Abhängigkeit deren Signale diese Airbags aktiviert werden. Aufprallsensoren können aus Preimpactsensoren wie Radar-und Ultraschall und/oder Kontaktsensoren bestehen. Die Kontaktsensoren zeigen den direkten Objektaufprall an und können auch je nach Messprinzip zur Klassifizierung des Aufprallobjekts beitragen. Weiterhin sollen Airbags auch für den Insassenschutz noch situationsangepasster aktiviert werden. Dazu sind weitere Informationen notwendig.

Erfindungsgemäß wird vorgeschlagen, einen Laufzeitunterschied zwischen einem Signal eines Kontaktsensors und einem zentral angeordneten Beschleunigungssensor zur Verbesserung der Ansteuerung der Personenschutzmittel auszunutzen. Der Kontaktsensor erkennt frühzeitig einen Aufprall, während auf Grund ihrer zentralen Position die Beschleunigungssensorik auf dem Fahrzeugtunnel üblicher Weise im Airbagsteuergerät diesen erst einige Millisekunden später erkennt. Der Laufzeitunterschied kann wertvolle Hinweise zur Crashschwere, zur Crashtypbestimmung, zur Schätzung der Größe des Aufprallobjekts und zur Abschätzung des Aufprallorts beitragen.

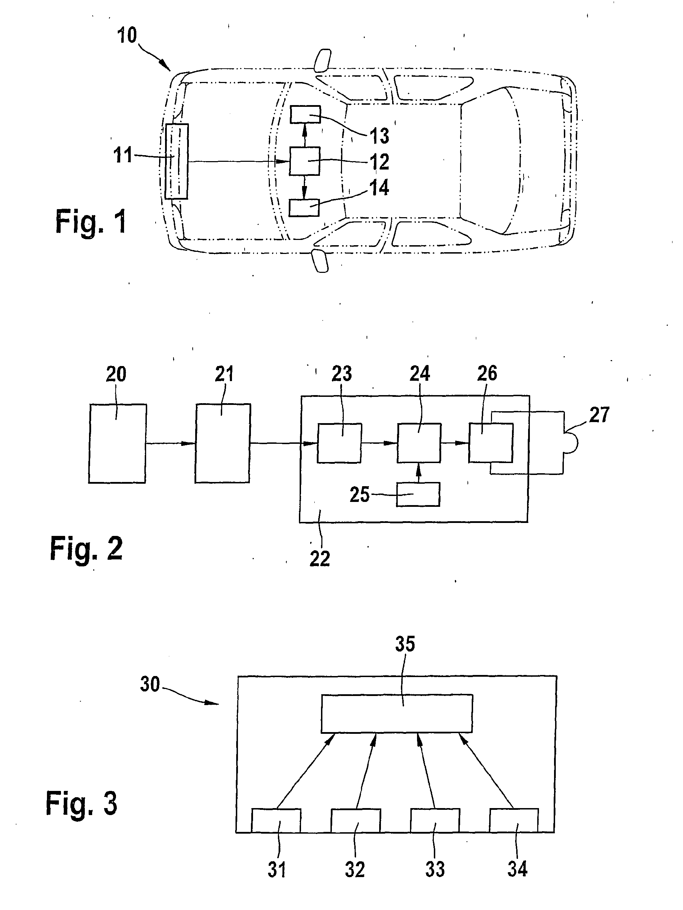

Figur 1 zeigt in einem ersten Blockschaltbild die erfindungsgemäße Vorrichtung. In einem Fahrzeug 10 ist im Bereich der Fahrzeugfront eine Kontaktsensorik 11 angeordnet. Diese kann dabei insbesondere im Stoßfänger angeordnet sein. Dabei handelt es sich um einen oder mehrere Schalter oder auch um Beschleunigungssensoren. Die Kontaktsensorik 11 ist über eine Leitung mit einem zentral angeordneten Steuergerät 12 zur Ansteuerung von Personenschutzmitteln verbunden. Beispielhaft ist über Datenausgänge das Steuergerät 12 mit Personenschutzmitteln 13 und 14, die hier Airbags repräsentieren sollen, verbunden. Üblicher Weise ist das Steuergerät 12 mit einer viel größeren Anzahl von Personenschutzmitteln verbunden, beispielhaft sind jedoch hier nur zwei dargestellt. Im Steuergerät 12 befindet sich nicht nur ein Prozessor, üblicher Weise ein Mikrokontroller, zur Ansteuerung der Personenschutzmittel 13 und 14 und zur Auswertung der Signale der Kontaktsensorik 11, sondern auch eine Beschleunigungssensorik, die zumindest in Fahrzeuglängsrichtung empfindlich ist. Auch die Signale dieser Beschleunigungssensorik werden vom Prozessor des Steuergeräts 12 ausgewertet. In Abhängigkeit von diesen Signalen steuert dann das Steuergerät 12 die Personenschutzmittel 13 und 14 an.

Erfindungsgemäß bestimmt nun das Steuergerät 12 einen Laufzeitunterschied zwischen den Signalen der Kontaktsensorik 11 und der eigenen Beschleunigungssensorik 12. Die Kontaktsensorik 11, deren Signal quasi ohne Zeitverzögerung über die Leitung zum Steuergerät 12 übertragen wird, erkennt einen Aufprall, beispielsweise an der Fahrzeugfront, erheblich früher, als das zentral angeordneten Steuergerät 12 mit seinem Beschleunigungssensor. Aus diesem Laufzeitunterschied ist die Crashschwere, ein frühes Starten des Auslösealgorithmus im Steuergerät 12, eine Abschätzung der Größe des Aufprallobjekts und eine Abschätzung des Aufprallorts möglich. Die Kontaktsensorik 11 kann durch weitere Sensoren, wie Beschleunigungssensoren und Precrashsensoren ergänzt werden. Weitere Sensoren, wie eine Insassensensorik und andere Beschleunigungs- bzw. Drucksensoren sind mit dem Steuergerät 12 verbunden, aber der Einfachheit halber hier nicht dargestellt.

Figur 2 zeigt ein weiteres Blockschaltbild der erfindungsgemäßen Vorrichtung. Die Kontaktsensorik 20 ist an einen Auswertebaustein 21 angeschlossen, der das Signal der Kontaktsensorik 20 aufbereitet und über die Leitung zum Steuergerät 22 überträgt. Das Steuergerät 22 weist einen Empfängerbaustein 23 auf, der das Signal vom Baustein 21 empfängt und an einen Prozessor 24 im Steuergerät 22 überträgt. Der Prozessor 24 berücksichtigt ebenfalls Signale von der im Steuergerät 22 befindlichen Beschleunigungssensorik 25. Diese Beschleunigungssensorik 25 umfasst zumindest die Beschleunigung in Fahrzeuglängsrichtung. In Abhängigkeit von diesen , Beschleunigungssignalen und dem Signal von der Kontaktsensorik 20 steuert der Prozessor 24 Endstufen 26 an, an die hier beispielhaft ein Zündkreis 27 angeschlossen ist. Insbesondere startet der Prozessor 24 seinen Auslösealgorithmus in Abhängigkeit von einem Signal von der Kontaktsensorik 20. Aus dem Laufzeitunterschied zwischen dem Signal von der Kontaktsensorik 20 und der Beschleunigungssensorik 25 ermittelt der Prozessor 24 die Crashschwere, eine Größe des Aufprallobjekts, den Aufprallort, um damit zu bestimmen, welche Personenschutzmittel und wie angesteuert werden.

Figur 3 zeigt eine spezielle Konfiguration der Kontaktsensorik. An der Fahrzeugfront 30 sind verschiedene Sensoren 30, 32, 33 und 34 über die Länge der Fahrzeugfront verteilt, üblicher Weise sind dies Schalter. Diese Schalter sind an einen Auswertebaustein 35 angeschlossen, der diese Signale aufbereitet, um sie dem Steuergerät 22 zu übertragen. Durch diese Konfiguration ist es möglich, einen Aufprallort sehr leicht zu identifizieren. Die Aufprallsensoren an der Fahrzeugfront können auch in der Höhe übereinander zusätzlich angeordnet sein. Damit kann auch ein Feld von solchen Aufprallsensoren an der Fahrzeugfront vorgesehen sein.

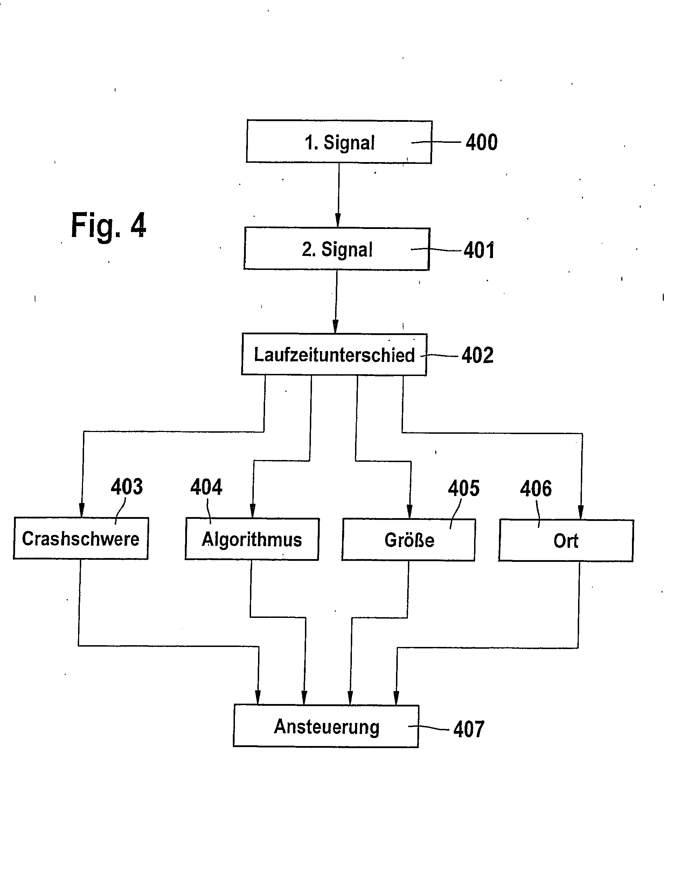

Figur 4 erläutert in einem Flussdiagramm den Ablauf, der auf der erfindungsgemäßen Vorrichtung durchgeführt wird. In Verfahrensschritt 400 wird das Signal von der Kontaktsensorik 20 erzeugt und über den Baustein 21 und den Baustein 23 an den Prozessor 24 des Steuergeräts 22 übertragen. In Verfahrensschritt 401 wird von der Beschleunigungssensorik 25 das zweiten Signal erzeugt. Zwischen diesen beiden Signalen besteht ein Laufzeitunterschied, der in Verfahrensschritt 402 bestimmt wird. Anhand des Laufzeitunterschieds bestimmt der Prozessor 24 die Crashschwere, in Verfahrensschritt 403, er startet den Algorithmus 404 in Abhängigkeit vom ersten Signal und bestimmt die Größe im Verfahrensschritt 405 des Unfallgegners. Zusätzlich kann anhand des Laufzeitunterschieds und anderer Signale der Aufprallort in Verfahrensschritt 406 bestimmt werden. Daraus wird dann die Ansteuerung, in Verfahrensschritt 407, der Rückhaltemittel 27 durchgeführt.

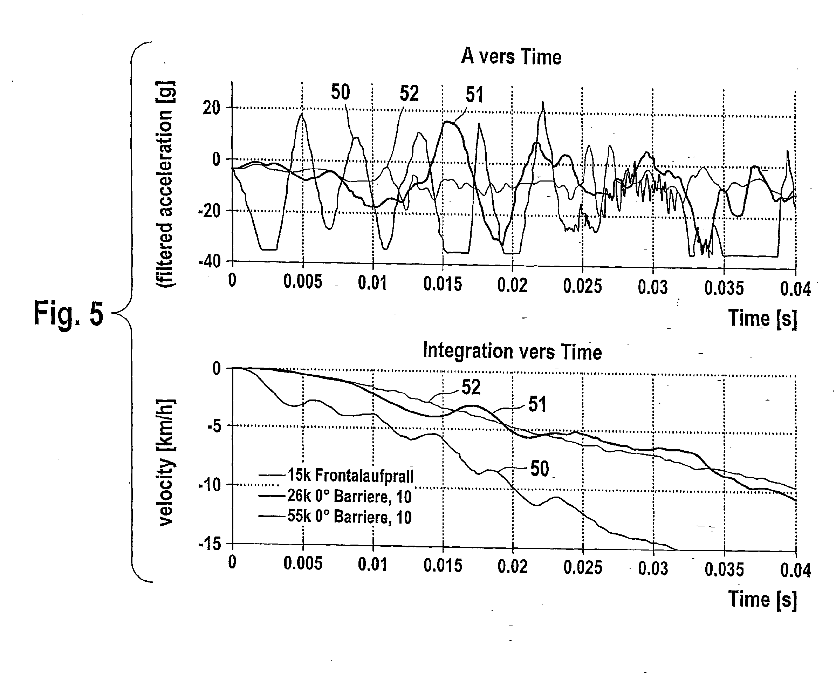

In Figur 5 sind im oberen Diagramm Beschleunigungen für einen Frontalaufprall und für einen Zusammenprall mit einer weichen und harten Barriere dargestellt. Im unteren Diagramm in Figur 5 ist der entsprechende Geschwindigkeitsabbau zu sehen. Durch die Synchronisation auf den realen Aufprall kann eine vereinfachte Trennung gerade im unteren Geschwindigkeitsbereich und bei weichen Barrieren erreicht werden.
Das Airbagsteuergerät beobachtet ständig die Signale des Sensors 25. Übersteigen diese Signale eine erste Schwelle (nachfolgend Rauschschwelle) so beginnt der Prozessor mit der Auswertung der Signale. Die Ausbildung dieser Schwelle kann unterschiedlich gestaltet sein, als einfache Schwelle oder z.B. durch Vergleich zweier Fensterintegrale mit unterschiedlicher Länge die im Crashfall voneinander abweichen. Wichtig ist hierbei nur die Bestimmung des Startpunktes durch die Beschleunigungssignale. Die Signale erfahren durch die Struktur eine gewisse Verzögerung da sie typisch vom Stoßfänger über die Längsstruktur zum Sensor im Airbagsteuergerät gelangen. Diese Verzögerung ist auch von der Aufprallgeschwindigkeit und der Barrierenhärte abhängig. In der Figur 5 werden 3 unterschiedliche Konfigurationen beschrieben:
Signal 50: 55km/h gegen eine starre Barriere
Signal 51: 26 km/h gegen eine starre Barriere
Signal 52: 15 km/h gegen eine starre Barriere
Diese 3 unterschiedlichen Aufprallgeschwindigkeiten sind in der Beschleunigung und dem daraus resultieren integrierten Geschwindigkeitsänderung aufgetragen. Leicht erkennt man die Ähnlichkeiten im Integralverlauf zwischen den Signalen 51 und 52. Dies führt zu einem erheblichen Aufwand zur Trennung dieser beiden Unterschiedlichen Crashes, da das Signal 52 als Nichtauslöser zu klassifizieren ist.

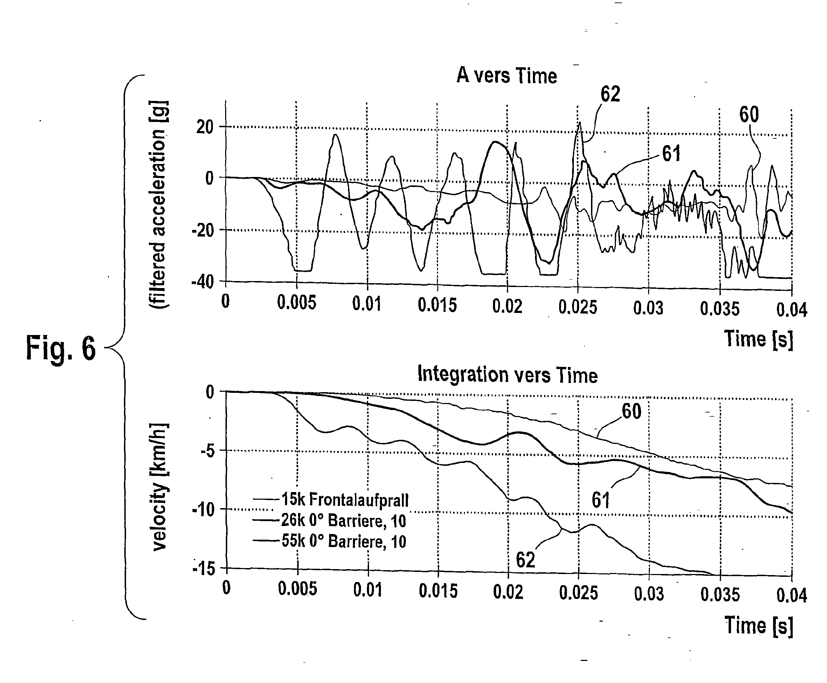

In der Figur 6 sind die gleichen Signale noch einmal aufgetragen, jedoch mit einer Synchronisation ab Aufprallbeginn. Dies wird durch den Aufprallsensor 11 geleistet. Die Signale lauten jetzt:
Signal 60: 55km/h gegen eine starre Barriere
Signal 61: 26 km/h gegen eine starre Barriere
Signal 62: 15 km/h gegen eine starre Barriere
Bei der Betrachtung des unteren Teilbildes wird leicht die optische Trennung der 3 unterschiedlichen Signale sichtbar. Dies wird über die Information des Aufprallsensors 11 erreicht.

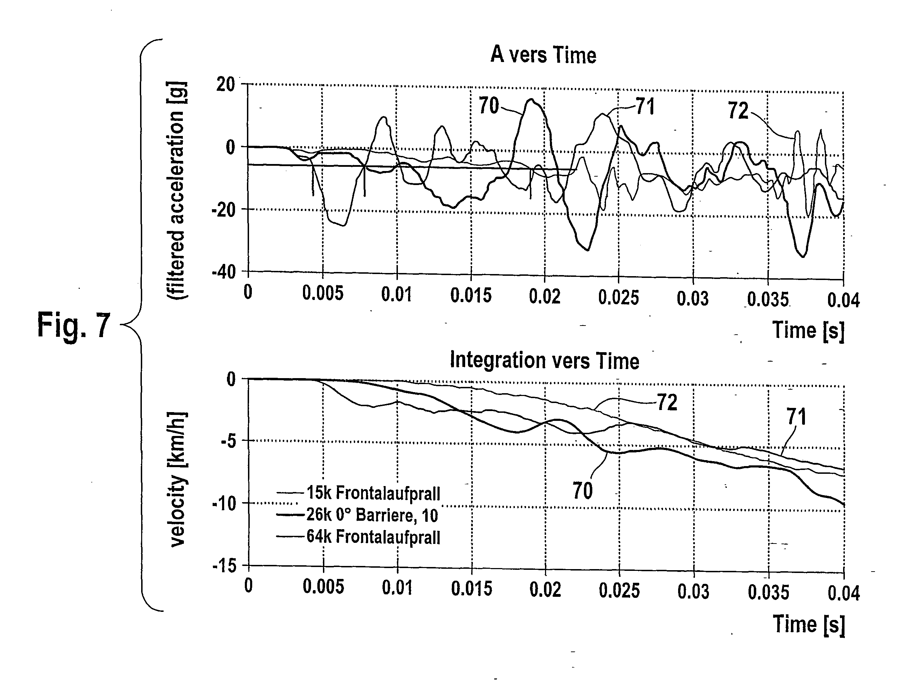

Figur 7 zeigt den Effekt einer Startschwelle. Durch die Bestimmung der Verzögerungszeit zwischen Aufprall und dem Erreichen einer Startschwelle und der Analyse des nach der Startschwelle folgenden Aufprallimpulses können gute Aussagen über die Crashschwere gemacht werden.

Figur 7 zeigt, dass der Aufprallimpuls des 64 km/h starken Aufpralls auf eine deformierbare Barriere sich vom 26-km/h-Crash mit einer starren Barriere unterscheidet. Bei Betrachtung der abgebauten Geschwindigkeit tritt jedoch der 26-km/h-Crash schon nach kurzer Zeit als stärkeres Signal hervor. Der 26-km/h-Crash wird durch die Kurve 70 gezeigt, und zwar im Beschleunigungs-Zeit-Diagramm, und im Geschwindigkeitsabbau-Zeit-Diagramm, während der 64-km/h-Crash durch die Kurve 71 gezeigt wird.

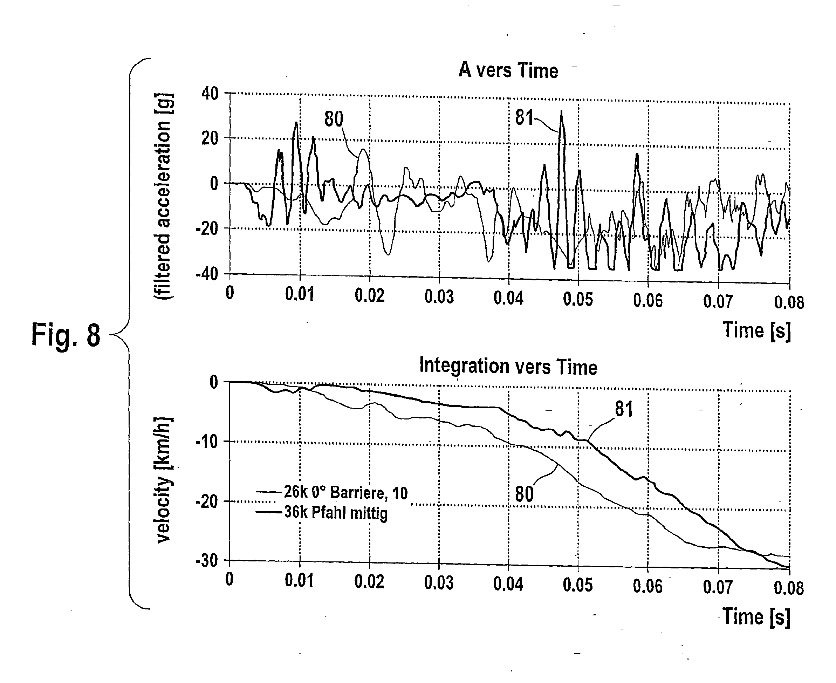

Weiterhin sind im Fig. 7 senkrechte Striche sichtbar (4,5 ms; 8ms; 19ms) diese Marken werden durch die entsprechenden Signale (71; 70; 72) mittels der eingezeichneten Schwelle (~ 3g) erreicht. Die Zeitmarken geben die Verzögerung durch die Struktur an und sind sehr grob umgekehrt proportional zur Aufprallgeschwindigkeit (nur Indikator). Weiterhin kann der auf die Marke folgende Beschleunigungsverlauf (erster Peak) ausgewertet und eine Aussage bzgl. Barrierenhärte gewonnen werden. Es ist leicht zu sehen, dass Kurve 71 einen starken Peak erzeugt der früher und eine wesentlich andere Form als der vom Signal 70 hat. Die Kurve 72 ist als Referenz aufgetragen. Ähnliche Aussagen können auch aus Fig 8 abgeleitet werden.

Figur 8 erläutert in einem Beschleunigungs-Zeit-Diagramm und einem Geschwindigkeitsabbau-Zeit-Diagramm die Wirkung eines Pfahlcrashes. Kann die Größe eines Aufprallobjekts erkannt werden, so kann bei Pfahlcrashes dies zu einer Veränderung der Auslöseempfindlichkeit genutzt werden. Durch das Eindringen des Pfahls in die weichen Fahrzeugstrukturen treten nach dem Aufprallimpuls kaum Verzögerungen auf. Dies ändert sich erst ab der Zeitmarke 40 ms, wie es durch die Kurve 81 dargestellt wird. Dort tritt der Pfahl auf massive Strukturen, zum Beispiel einen Motorblock und sorgt damit für die Verzögerung des Fahrzeugs. Eine Identifikation des Objekts, die Aufprallgröße und der Crashverlauf können die Auslöseschwelle in diesem Fall anpassen.

## Patentansprüche

1. Vorrichtung zur Ansteuerung von Personenschutzmitteln (13, 14), wobei die Vorrichtung derart konfiguriert ist, dass die Vorrichtung die Personenschutzmittel (13, 14) in Abhängigkeit von einem Laufzeitunterschied zwischen einem ersten Signal von einer an der Fahrzeugfront angeordneten Aufprallsensorik (11) und einem zweiten Signal von einer zentral angeordneten Beschleunigungssensorik (25) ansteuert, wobei das erste und zweite Signal jeweils einen Aufprall kennzeichnen, **dadurch gekennzeichnet, dass** die Vorrichtung in Abhängigkeit von einem Laufzeitunterschied eine Crashschwere bestimmt und die Personenschutzmittel (13, 14) in Abhängigkeit von der Crashschwere ansteuert.

2. Vorrichtung nach Anspruch 1, **dadurch gekennzeichnet, dass** die Vorrichtung in Abhängigkeit von dem ersten Signal einen Auslösealgorithmus startet.

3. Vorrichtung nach Anspruch 2, **dadurch gekennzeichnet, dass** die Vorrichtung in Abhängigkeit von dem Laufzeitunterschied eine Größe eines Aufprallobjekts bestimmt und in Abhängigkeit von der Größe den Auslösealgorithmus beeinflusst.

4. Vorrichtung nach Anspruch 1, **dadurch gekennzeichnet, dass** die Vorrichtung den Laufzeitunterschied bei der Bestimmung des Aufprallorts berücksichtigt.

5. Vorrichtung nach Anspruch 1, **dadurch gekennzeichnet, dass** die Aufprallsensorik (11, 20) eine Kontaktsensorik und/oder eine Beschleunigungssensorik und/oder eine Umfeldsensorik aufweist.

6. Vorrichtung nach Anspruch 1, **dadurch gekennzeichnet, dass** die Aufprallsensorik an der Fahrzeugfront (30) verteilt ist.

## Claims

1. Device for actuating personal protection means (13, 14) wherein the device is configured in such a way that the device actuates the personal protection means (13, 14) as a function of a difference in transit time between a first signal from an impact sensor system (11) which is arranged on the front of the vehicle and a second signal from a centrally arranged acceleration sensor system (25), wherein the first and second signals each characterize an impact, **characterized in that** the device determines the severity of a crash as a function of a difference in transit time and actuates the personal protection means (13, 14) as a function of the severity of the crash.

2. Device according to Claim 1, **characterized in that** the device starts a triggering algorithm as a function of the first signal.

3. Device according to Claim 2, **characterized in that** the device determines a size of an impact object as a function of a difference in transit time and influences the triggering algorithm as a function of the size.

4. Device according to Claim 1, **characterized in that** the device takes into account the difference in transit time in the determination of the location of the impact.

5. Device according to Claim 1, **characterized in that** the impact sensor system (11, 20) has a contact sensor system and/or an acceleration sensor system and/or a surroundings sensor system.

6. Device according to Claim 1, **characterized in that** the impact sensor system is distributed on the front (30) of the vehicle.

## Revendications

1. Dispositif de commande des moyens de protection de personnes (13, 14), ce dispositif étant configuré pour commander les moyens de protection de personnes (13, 14) suivant la différence de temps de parcours entre un premier signal de premiers capteurs de collision (11) installé à l'avant du véhicule et un second signal fourni par un capteur d'accélération (25), en position centrale,
le premier et le second signal caractérisant respectivement une collision,
**caractérisé en ce qu'**
en fonction d'une différence de temps de parcours, le dispositif définit une gravité de la collision et commande les moyen de protection de personnes (13, 14) selon la gravité de la collision.

2. Dispositif selon la revendication 1,
**caractérisé en ce qu'**
il lance un algorithme de déclenchement en fonction du premier signal.

3. Dispositif selon la revendication 2,
**caractérisé en ce qu'**
il détermine une dimension d'un objet de collision en fonction de la différence de temps de parcours et il influence l'algorithme de déclenchement en fonction de cette grandeur.

4. Dispositif selon la revendication 1,
**caractérisé en ce qu'**
il tient compte de la différence de temps de parcours pour déterminer l'emplacement de l'impact.

5. Dispositif selon la revendication 1,
**caractérisé en ce que**
les capteurs de collision (20) comportent un capteur de contact et/ou un capteur d'accélération et/ ou un capteur de champ environnant.

6. Dispositif selon la revendication 1,
**caractérisé en ce que**
les capteurs de collision sont répartis à l'avant (30) du véhicule.
